# EUROPEAN PATENT SPECIFICATION

(11) **EP 4 446 199 B1**
(45) Date of publication and mention of the grant of the patent: **12.08.2026**
(21) Application number: 24167415.9
(22) Date of filing: 28.03.2024
(51) Int. Cl.: B62B 9/24, B60N 2/28

(54) **ADJUSTABLE HARNESS SYSTEM**
EINSTELLBARES GURTZEUGSYSTEM
SYSTÈME DE HARNAIS RÉGLABLE

(30) Priority: 05.04.2023 US 202363494327 P
(43) Date of publication of application: 16.10.2024
(73) Proprietor: Baby Jogger II, LLC, 30328 Atlanta GA (US)
(72) Inventor: GERVASI, John Lee, Roswell, 30076 (US); ROE, Megan Cahill, Roswell, 30075 (US)
(74) Representative: Cabinet Beau de Loménie

(56) References cited:
- EP-A1- 2 634 038
- DE-A1- 10 337 018
- DE-A1- 102007 058 278
- US-A- 4 223 917

## Description

### TECHNICAL FIELD

The present invention is generally in the field of harness systems, and more particularly related to harness systems for strollers.

### BACKGROUND

DE 103 37018 A1, US 4 223 917 A and EP 2 634 038 A1 show belt systems with a buckle and a strap fixed to a structure, a stopping element fixed on the strap and a slider for interacting with the buckle, a sliding movement of the slider on the strap being restricted by the stopping element.

Strollers often include a harness that is used to secure a child within a seat of the stroller. Conventional harnesses may include multiple straps that are affixed to the stroller seat. A child may be provided in the seat, the straps may be provided around the child, and the straps may be inserted into a buckle to secure the child within the seat. The harness may also include a slide that is configured to slide along the strap to adjust the tightness of the harness to further secure the child. However, the thickness of a strap is typically less than the thickness of the apertures in the slides through which the strap is inserted. This results in limited resistance being provided to the slide by the strap as a user moves the slide up and down the strap, which allows for the child to easily move the slide downwards and adjust the tightness of the harness.

### SUMMARY

The invention is defined in the claims.

### BRIEF DESCRIPTION OF THE DRAWINGS

The detailed description is set forth with reference to the accompanying drawings. The use of the same reference numerals may indicate similar or identical items.
FIGS. IA-IC are front views of a stroller including an adjustable harness system.
FIG. 2 is a partial view of a portion of a strap of the adjustable harness system of FIGS. IA-IC.
FIG. 3A is a side view of a strap of the adjustable harness system of FIGS. IA-IC.
FIG. 3B is a front view of a strap of the adjustable harness system of FIGS. IA-IC.
FIG. 3C is side view of another strap of the adjustable harness system of FIGS. IA-IC.
FIGS. 3D-3E are a front view of another strap of the adjustable harness system of FIGS. IA-IC.

The present disclosure provides a more detailed and specific description with reference to the accompanying drawings. The drawings and specific descriptions of the drawings, as well as any specific or other embodiments discussed, are intended to be read in conjunction with the entirety of this disclosure.

### DETAILED DESCRIPTION

Example embodiments will now be described more fully hereinafter with reference to the accompanying drawings, in which example embodiments are shown. The concepts disclosed herein may, however, be embodied in many different forms and should not be construed as limited to the example embodiments set forth herein; rather, these embodiments are provided so that this disclosure will be thorough and complete, and will fully convey the scope of the concepts to those skilled in the art. Like numbers refer to like, but not necessarily the same or identical elements throughout.

Strollers may include a harness system (which may also be referred to simply as a "harness" herein as well) that may be used to secure a child within a seat of the stroller. The harness system may include multiple straps that are provided around the arms and/or shoulders of the child. The straps may include an adjustable mechanism, such as a slide attached to each individual strap. The slide may be moved up or down the strap to adjust the tightness of the straps (and the harness) against the child.

Conventionally, the straps are configured such that the slide that is used to adjust the tightness of the harness may easily be moved up and down the strap without significant resistance. Thus, even after a child is provided within the stroller using the harness, and the harness is tightened to secure the child within the seat, the child may be able to move the slide to loosen the straps. This may result in the child being less secure within the stroller.

In embodiments, the present disclosure describes an adjustable harness system for a stroller. In contrast with conventional harnesses, the harness described herein includes one or more protrusions provided at various intervals on the straps (e.g., raised portions of the surface of the straps). The one or more protrusions provide resistance against the movement of the slide at the locations of the protrusions. In this manner, the slide may be moved up and down with little resistance along the portions of the strap between the protrusions. However, additional force may be required to move the slide across a protrusion. Thus, the protrusions serve to limit the ability of the child to loosen or otherwise adjust the tightness of the harness after the child has been secured within the stroller.

In embodiments, the straps may comprise a webbing material and the protrusions may be formed as a part of the webbing. For example, additional material may be provided in the webbing at the intervals associated with the protrusions such that the webbing is raised at those intervals. The protrusions may alternatively include elements that are added to the webbing. For example, a material may be stitched to the exterior of the webbing forming the straps. A material may also be permanently or removably adhered to the straps in any other suitable manner as well. The straps may also comprise any other type of flexible or deformable material as well.

The intervals at which the protrusions are provided on the straps may be pre-determined based on standard height locations associated with stroller harness systems. That is, different geographical regions may be associated with standard harness height positions. The location of the protrusions may be selected according to these height positions to provide a visual indication to a user as to where the standard height positions are located. The location of the protrusions may vary depending on the region. For example, the location of the protrusions on a harness used within the United States may differ than the location of the protrusions on a harness used within Europe. In embodiments, a harness may also include multiple different sets of protrusions that may correspond to standard heights for different geographical regions. The protrusions associated with the different regions may be indicated in any number of suitable manners. For example, the protrusions associated with one region may be provided in one color and the protrusions associated with another region may be provided in another color. In other embodiments, the locations of the protrusions along the strap may not necessarily correspond to standard heights, but may also be provided at any other intervals along the strap as well.

FIGS. IA is a front view of a stroller IO including an adjustable harness system. Particularly, the figure shows a comparison between a strap 24 that may be used with a conventional harness system of a stroller IO and a strap 26 that may instead be used with the harness system described herein. The comparison illustrates differences between the strap 24 associated with the conventional harness system and the strap 26 associated with the harness system described herein. A complete harness system may include multiple straps similar to the strap 26 rather than including strap 24 and strap 26 as shown in the figure.

A conventional harness system includes one or more straps, such as strap 24 for example. A conventional harness system may also include a second strap similar to strap 24 in place of the strap 26 shown in the figure (reference hereinafter to strap 24 may also refer to a second type of similar strap). The strap 24 may be placed around the shoulders and/or arms of a child provided in the stroller I0. The strap 24 may also include an adjustable pad 42 that provides a cushion between the strap 24 and the child to provide additional comfort to the child when the strap 24 is secured against the child. The strap 24 may be secured to the stroller IO as well. Additional straps, such as straps 25 and 27 may be provided over the hips and/or legs of the child to further secure the child within the stroller I0.

Any of the straps 24, 25, and 27 (and/or any other straps) may be inserted into a buckle 44, such that the straps 24, 25, and 27 may form the completed harness system and the child may be secured within the stroller I0. The buckle 44 may include a button 46 that may be pressed to allow the straps 24, 25, and 27 to be disengaged from the buckle 44 to allow the child to be removed from the stroller I0.

Turning to the harness system describes herein, the strap 26 is affixed to the stroller I0 (shown in further detail in FIG. IB and 3A). For example, as shown in FIG. IB, the strap 26 may be affixed to the stroller IO at a first end 28 and a second end 29. The strap 26 may be affixed to the stroller IO in any suitable manner. For example, the first end 28 and the second end 29 may be stitched into the material of the stroller I0.

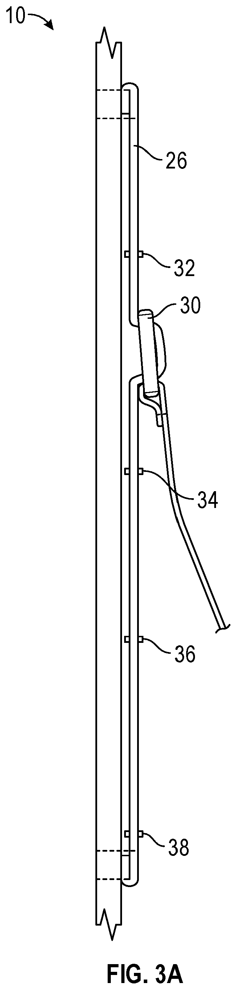

In embodiments, a slide 30 is provided on the strap 26 that is configured to be moved up and down the strap 26 by a user (for example, a parent securing a child within the stroller I0). That is, the strap 26 may be fed through one or more apertures of the slide (as shown in FIG. 3A). Also provided within the slide 30 (for example, one of the apertures of the slid 30) is a separate harness strap 33. While the strap 26 is affixed to the stroller I0, the harness strap 33 is configured to be provided within the buckle 44 to complete the harness system to secure a child within the stroller 10. Thus, the harness strap 33 is removably secured at one end within the buckle 44 and at another end through the slide 30 that is also attached to the strap 26 (which is affixed to the stroller I0).

In contrast with the strap 24 of the conventional harness, the strap 26 also includes one or more protrusions. For example, FIG. IA shows a first protrusion 32 provided on the strap 26. Any other number of protrusions may also exist on the strap 26 at various intervals. For example, FIG. IB shows four protrusions provided on the strap 26 (first protrusion 32, second protrusion 34, third protrusion 36, and fourth protrusion 38) at various intervals along the strap 26. The protrusions 32, 34, 36, and 38 comprise raised portions of the strap 26. For example, the strap 26 may be a webbing material and the protrusions 32, 34, 36, and 38 may be additional material provided at the locations of the protrusions 32, 34, 36, and 38 that form raised portions of the surface of the strap 26 at those locations. The strap 26 and/or protrusions 32, 34, 36, and 38 may also comprise any other material. The protrusions 32, 34, 36, and 38 may also be provided in any other size and/or shape, and may extend outwards from either side of the strap 26 (as shown in FIG. 3A) by any distance.

The protrusions 32, 34, 36, and 38 provide resistance against the movement of the slide 30 at the locations of the protrusions 32, 34, 36, and 38. Given that the protrusions 32, 34, 36, and 38 are raised from the surface of the strap 26, a user may be required to provide additional force to continue to move the slide 30 across the protrusions 32, 34, 36, and 38 than may be required to move the slide within the portions of the strap 26 in between the various protrusions 32, 34, 36, and 38. Providing this additional resistance at various intervals along the strap 26 may mitigate the likelihood that a child that is secured within the stroller using the harness is able to freely move the slide 26 to significantly adjust the tightness of the harness.

The protrusions 32, 34, 36, and 38 are illustrated as being stitching formed on the strap 26. However, the protrusions may also be formed in any other manner. For example, the protrusions 32, 34, 36, and 38 may be formed by providing additional material on the straps 26 at the various intervals. The protrusions 32, 34, 36, and 38 may also be formed by removably or permanently affixing a separate element onto the strap 26. For example, a material may be adhered to the strap 26 at the various intervals at which it is desired for the protrusions 32, 34, 36, and 38 to exist.

The protrusions 32, 34, 36, and 38 are provided at various intervals along the strap 26. In embodiments, the location of the protrusions 32, 34, 36, and 38 may correspond to standard height locations for the harness. In this manner, the intervals at which the protrusions 32, 34, 36, 38 are provided on the straps may provide height indicators. In some instances, the distances between the protrusions 32, 34, 36, and 38 may be equivalent. However, in other instances, some or all of the distances between the protrusions 32, 34, 36, 38 may be different. That is, different geographical regions may be associated with standard harness height positions. Thus, the location of the protrusions 32, 34, 36, 38 may provide an indication of locations of standard height locations associated with a harness of a stroller IO for the particular geographical region. The location of the protrusions 32, 34, 36, 38 may vary depending on the region.

FIG. IA shows that the protrusions 32, 34, 36, 38 are located at heights of button holes 18, 20, 22, 23 etc. However, in some instances, the button holes 18, 20, 22, 23 etc. (as well as button holes 12, 14, 16, and/or any other button holes) may not necessarily be included on the stroller IO (the same applies to any button holes shown in any of the figures).

The protrusions 32, 34, 36, and 38 may also be provided in a color that allows for the protrusions 32, 34, 36, and 38 to be easily identified and distinguished from the remainder of the material comprising the strap 26. For example, the strap 26 may be a black color and the protrusions 32, 34, 36, and 38 may be provided in an orange color (however, any other colors may also be used). This allows for a user to more easily identify the standard height locations that the protrusions 32, 34, 36, and 38 indicate along the strap 26.

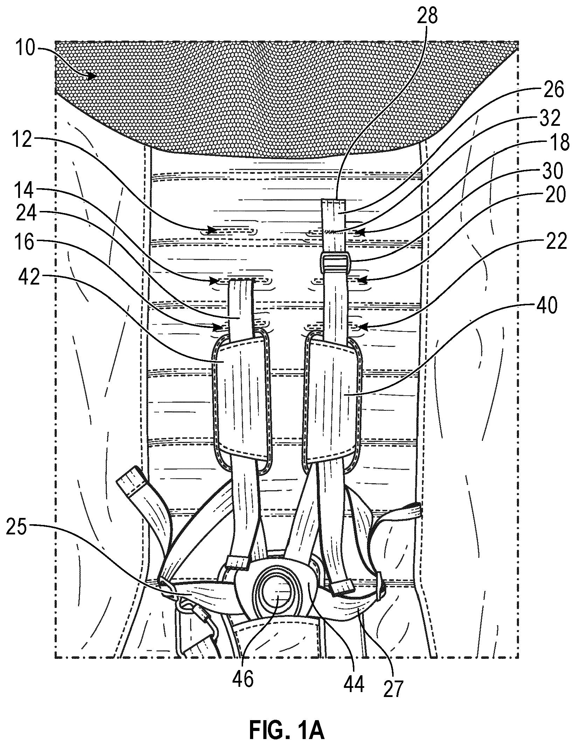

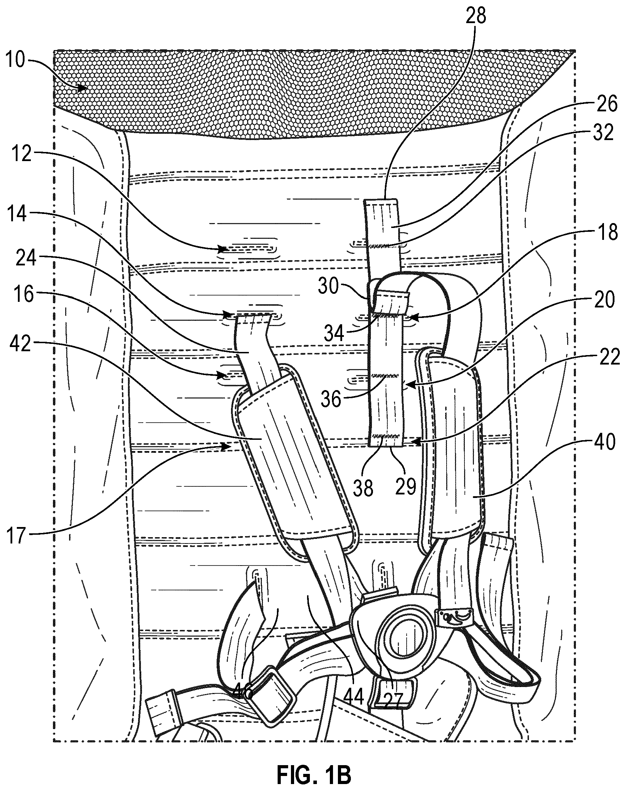

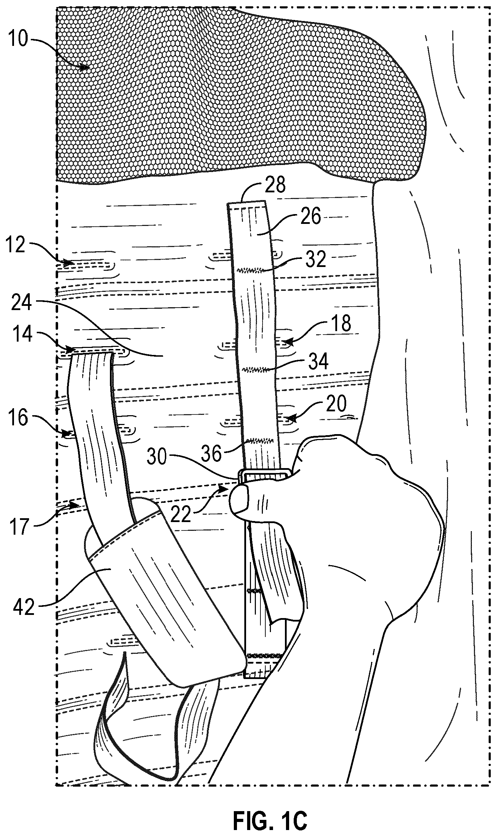

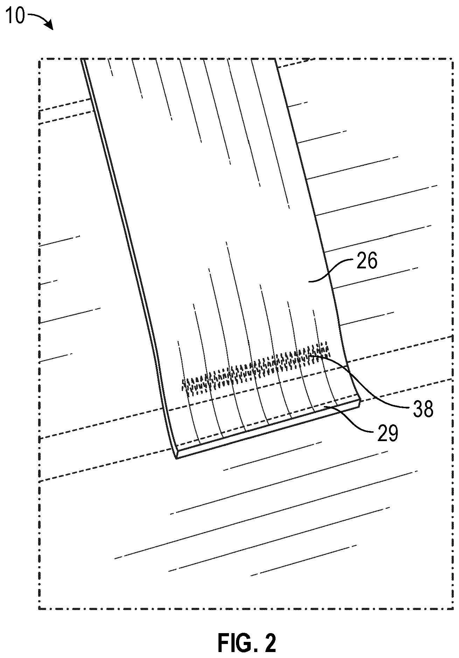

FIG. 2 is a partial view of a portion of a strap 26 of the adjustable harness system of FIGS. IA-IC. Particularly, FIG. 2 shows that the second end 29 of the strap 26 is affixed to the stroller 10. FIG. 2 also shows one of the protrusions 38.

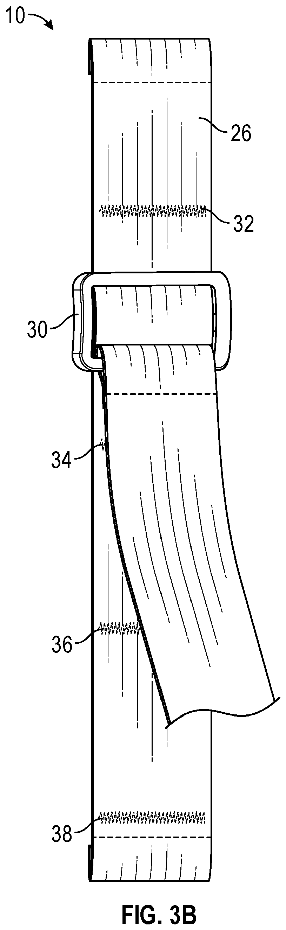

FIG. 3A is a side view of a strap 26 of the adjustable harness system of FIGS. IA-IC. FIG. 3B is a front view of a strap 26 of the adjustable harness system of FIGS. IA-IC.

The strap 26 is shown as being affixed to the stroller IO at the first end 28 and the second end 29. In embodiments, the strap 26 may comprise a webbing material and the webbing may be affixed to a front and/or back surface of the stroller at the first end 28 and the second end 29. In embodiments, the strap 26 may also be removably affixed to the stroller IO as well through any suitable mechanism.

The strap 26 is shown as being provided through apertures (for example, apertures 46 and 48) in the slide 30. Also provided through one of the apertures in the slide 30 is a harness strap 33. While the strap 26 is affixed to the stroller 30, the harness strap 33 is a portion of the harness that is connected to the buckle 44 as shown in FIG. IA As the slide 30 is moved up the strap 26, the tightness of the harness strap 33 is increased as an end 31 of the harness strap 33 moves further away from the buckle.

The side view also shows the protrusions 32, 34, 36, and 38. The protrusions 32, 34, 36, and 38 are shown as extending outwards from the front side 50 and the back side 52 of the strap 26. Extending the protrusions 32, 34, 36, and 38 outwards from both sides of the strap 26 provides further resistance to the movement of the slide 30 across the protrusions 32, 34, 36, and 38. As the slide moves across a given protrusion, the additional material that the protrusion provides on top of the strap 26 may also need to travel through the aperture 46 or 48 of the slide 30. The protrusions 32, 34, 36, and 38 may be sized such that the combination of the strap 26 and a protrusion is equal to or greater than the size of the apertures 46 and 48. The protrusions 32, 34, 36, and 38 may comprise a flexible or deformable material. Thus, a user may need to apply further force to allow the protrusion 32, 34, 36, and 38 to fit through the aperture 46 or 48. The protrusions 32, 34, 36, and 38 may also only be provided on the front side 50 or the back side 52 of the strap 26 as well.

In embodiments, the distance to which the protrusions 32, 34, 36, and 38 extend outwards from the strap 26 may vary depending on the amount of resistance against the movement of the slide 30 that is desired. For example, extending the protrusions 32, 34, 36, and 38 outwards a greater distance from the strap 26 may provide additional resistance. Furthermore, although FIG. 2 illustrates that the protrusions 32, 34, 36, and 38 all extend from the strap 26 equal distances, some of the protrusions 32, 34, 36, and 38 may extend outwards from the strap 26 to different distances as well.

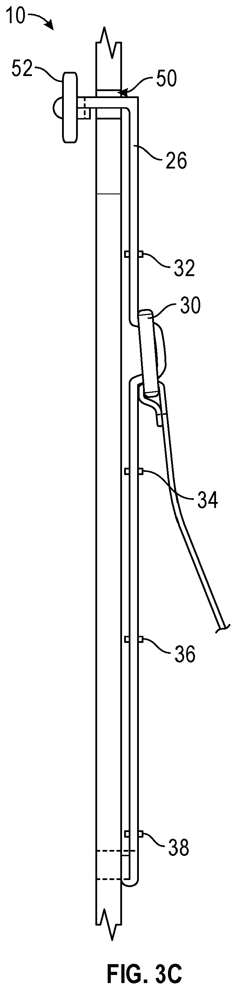

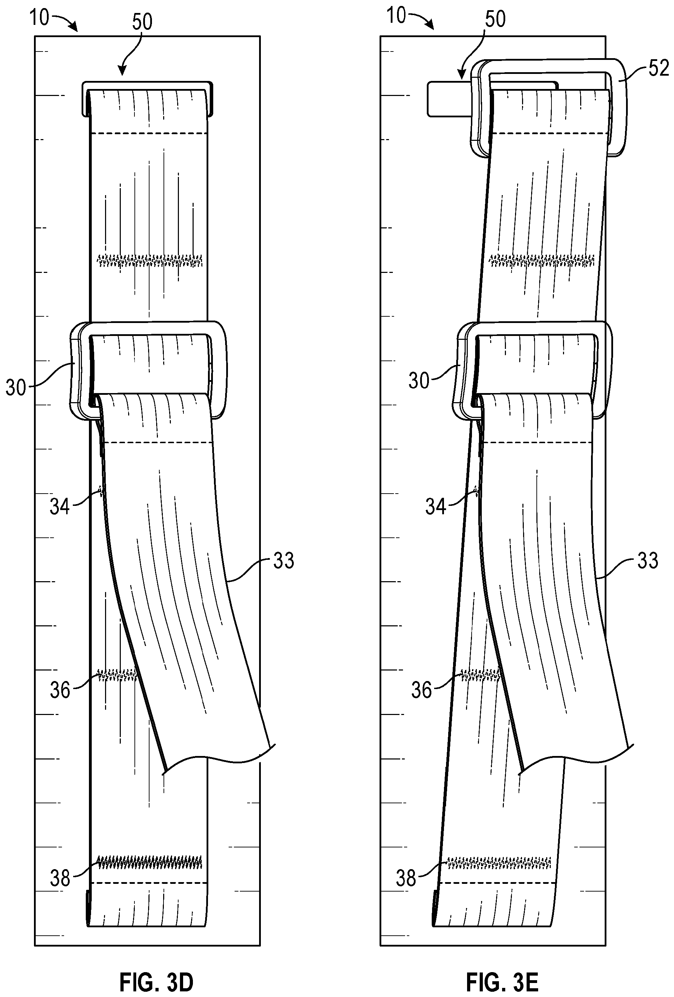

FIG. 3C is a side view of another strap 26 of the adjustable harness system of FIGS. IA-IC. FIGS. 3D-3E show a front view of another strap 26 of the adjustable harness system of FIGS. IA-IC. FIGS. 3C-3E illustrate another mechanism by which the strap 26 may be secured to the stroller I0. Particularly, as shown in the side view of FIG. 3C, an aperture 50 may be provided through a surface of the stroller IO and the strap 26 may be provided through the aperture 50. The strap 26 may be secured to the stroller IO by providing an anchoring element 52 behind the surface of the stroller IO on which the aperture 50 is provided. The anchoring element 52 is sized such that the anchoring element 52 may not fit through the aperture 50 or may not easily fit through the aperture 50. In this manner, a child who is secured within the stroller I0 may not be able to easily remove the strap 26 from the stroller IO (or may not be able to remove the strap 26 from the stroller IO at all). FIG. 3D shows the strap 26 with the anchoring element 52 provided in the aperture 50 and secured within the stroller I0. FIG. 3E shows the strap 26 with the anchoring element 52 removed from the aperture 50. FIGS. 3C-3E merely provide one additional example of a manner by which the strap 26 may be secured to the stroller I0. The strap 26 may also be secured to the stroller IO in any other suitable manner.

Though the disclosed examples include particular arrangements of a number of parts, components, features, and aspects, the invention is defined in the claims.

## Claims

1. A harness system for a stroller (10), the harness system comprising:
a first strap (26) configured to be affixed to the stroller (10), the first strap (26) comprising
one or more raised portions (32, 34, 36, 38);
and
a slide (30) provided on the first strap,
**characterized by** resistance provided by
the raised portions (32, 34, 36, 38) for requiring force for movement of the slide (30) across the raised portions (32, 34, 36, 38) larger than a force for movement of the slide (30) along the strap between two and not across any of the raised portions (32, 34, 36, 38).

2. The harness system of claim 1, wherein the raised portions (32, 34, 36, 38) are provided along the first strap at designed intervals.

3. The harness system of claim 1 or claim 2, wherein the raised portions (32, 34, 36, 38) comprise stitching into the first strap (26).

4. The harness system of any preceding claim, wherein the raised portions (32, 34, 36, 38) are separate from the first strap and are disposed on the first strap.

5. The harness system of any preceding claim, wherein the raised portions (32, 34, 36, 38) comprise a different color than the first strap (26).

6. The harness system of any preceding claim, further comprising:
a second strap (33) provided through the slide (30), wherein the second strap (33) is configured to be inserted into a buckle (44) of the harness system.

7. The harness system of claim 6, wherein the second strap (33) is configured to increase or decrease in tightness as the slide (30) is moved along the first strap.

8. The harness system of any preceding claim, wherein the first strap (26) is configured to be affixed to the stroller (10) at a first end (28) of the first strap and a second end (29) of the first strap.

9. The harness system of any preceding claim, wherein the raised portions (32, 34, 36, 38) extend outwards from a front side of the first strap and a back side of the first strap.

10. A stroller (10) comprising the harness system of any preceding claim.

## Patentansprüche

1. Gurtzeugsystem für einen Kinderwagen (10), wobei das Gurtzeugsystem umfasst:
einen ersten Riemen (26), der dazu konfiguriert ist, an dem Kinderwagen (10) befestigt zu sein, wobei der erste Riemen (26) einen oder mehrere erhöhte Abschnitte (32, 34, 36, 38) umfasst; und
einen Schieber (30), der an dem ersten Riemen bereitgestellt wird,
**gekennzeichnet durch** einen Widerstand, der durch die erhöhten Abschnitte (32, 34, 36, 38) bereitgestellt wird, damit eine Kraft zum Bewegen des Schiebers (30) über die erhöhten Abschnitte (32, 34, 36, 38) benötigt wird, die größer als eine Kraft für eine Bewegung des Schiebers (30) entlang des Riemens zwischen zwei und nicht über einen beliebigen der erhöhten Abschnitte (32, 34, 36, 38) ist.

2. Gurtzeugsystem nach Anspruch 1, wobei die erhöhten Abschnitte (32, 34, 36, 38) entlang des ersten Riemens in bestimmten Intervallen bereitgestellt werden.

3. Gurtzeugsystem nach Anspruch 1 oder Anspruch 2, wobei die erhöhten Abschnitte (32, 34, 36, 38) eine Absteppung in den ersten Riemen (26) umfassen.

4. Gurtzeugsystem nach einem der vorhergehenden Ansprüche, wobei die erhöhten Abschnitte (32, 34, 36, 38) von dem ersten Riemen getrennt sind und auf dem ersten Riemen angeordnet sind.

5. Gurtzeugsystem nach einem der vorhergehenden Ansprüche, wobei die erhöhten Abschnitte (32, 34, 36, 38) eine andere Farbe als der erste Riemen (26) umfassen.

6. Gurtzeugsystem nach einem der vorhergehenden Ansprüche, ferner umfassend:
einen zweiten Riemen (33), der durch den Schieber (30) hindurch bereitgestellt wird, wobei der zweite Riemen (33) dazu konfiguriert ist, in eine Schnalle (44) des Gurtzeugsystems eingefügt zu werden.

7. Gurtzeugsystem nach Anspruch 6, wobei der zweite Riemen (33) dazu konfiguriert ist, an Straffheit zuzunehmen oder abzunehmen, während der Schieber (30) entlang des ersten Riemens bewegt wird.

8. Gurtzeugsystem nach einem der vorhergehenden Ansprüche, wobei der erste Riemen (26) dazu konfiguriert ist, an dem Kinderwagen (10) an einem ersten Ende (28) des ersten Riemens und einem zweiten Ende (29) des ersten Riemens befestigt zu werden.

9. Gurtzeugsystem nach einem der vorhergehenden Ansprüche, wobei sich die erhöhten Abschnitte (32, 34, 36, 38) von einer Vorderseite des ersten Riemens und einer Rückseite des ersten Riemens aus nach außen erstrecken.

10. Kinderwagen (10), umfassend das Gurtzeugsystem nach einem der vorhergehenden Ansprüche.

## Revendications

1. Système de harnais pour une poussette (10), le système de harnais comprenant :
une première sangle (26) configurée pour être fixée à la poussette (10), la première sangle (26) comprenant une ou plusieurs parties surélevées (32, 34, 36, 38) ; et
un coulisseau (30) prévu sur la première sangle,
**caractérisé par** la résistance fournie par
les parties surélevées (32, 34, 36, 38), de sorte que la force nécessaire pour déplacer le coulisseau (30) en franchissant les parties surélevées (32, 34, 36, 38) est supérieure à une force nécessaire pour déplacer le coulisseau (30) le long de la sangle entre deux parties surélevées et sans franchir l'une quelconque des parties surélevées (32, 34, 36, 38).

2. Système de harnais selon la revendication 1, dans lequel les parties surélevées (32, 34, 36, 38) sont prévues le long de la première sangle à des intervalles déterminés.

3. Système de harnais selon la revendication 1 ou 2, dans lequel les parties surélevées (32, 34, 36, 38) comprennent des coutures réalisées dans la première sangle (26).

4. Système de harnais selon l'une quelconque des revendications précédentes, dans lequel les parties surélevées (32, 34, 36, 38) sont séparées de la première sangle et sont disposées sur la première sangle.

5. Système de harnais selon l'une quelconque des revendications précédentes, dans lequel les parties surélevées (32, 34, 36, 38) comprennent une couleur différente de la première sangle (26).

6. Système de harnais selon l'une quelconque des revendications précédentes, comprenant en outre :
une deuxième sangle (33) prévue à travers le coulisseau (30), dans lequel la deuxième sangle (33) est configurée pour être insérée dans une boucle (44) du système de harnais.

7. Système de harnais selon la revendication 6, dans lequel la deuxième sangle (33) est configurée pour voir sa tension augmenter ou diminuer lorsque le coulisseau (30) est déplacé le long de la première sangle.

8. Système de harnais selon l'une quelconque des revendications précédentes, dans lequel la première sangle (26) est configurée pour être fixée à la poussette (10) au niveau d'une première extrémité (28) de la première sangle et d'une deuxième extrémité (29) de la première sangle.

9. Système de harnais selon l'une quelconque des revendications précédentes, dans lequel les parties surélevées (32, 34, 36, 38) s'étendent vers l'extérieur à partir d'un côté avant de la première sangle et d'un côté arrière de la première sangle.

10. Poussette (10) comprenant le système de harnais selon l'une quelconque des revendications précédentes.
